# EUROPEAN PATENT APPLICATION

(11) **EP 3 782 950 A1**
(43) Date of publication of application: **24.02.2021**
(21) Application number: 19192816.7
(22) Date of filing: 21.08.2019
(51) Int. Cl.: B66C 23/20, F03D 13/10

(54) **NACELLE FOR A WIND TURBINE**

(71) Applicant: Siemens Gamesa Renewable Energy A/S, 7330 Brande (DK)
(72) Inventor: Munk-Hansen, Thorkil, 7000 Fredericia (DK)
(74) Representative: Aspacher, Karl-Georg

(57) **Abstract**

It is described a nacelle (10) for a wind turbine (1) extending longitudinally along a longitudinal axis (Y) and comprising:
a nacelle front (11) at which a wind rotor (5) is subject to be rotatably coupled to the nacelle (10),
a nacelle back (12) longitudinally opposite to the nacelle front (11),
a nacelle base (13) at which the nacelle (10) is subject to be rotatably coupled to a tower (2) of the wind turbine (1),
a nacelle roof (14) opposite to the nacelle base (13),
a nacelle crane at least partially housed in an inner volume (V) of the nacelle (10) delimited by the nacelle front (11), the nacelle back (12), the nacelle base (13), the nacelle roof (14) and two nacelle sides (24).

The nacelle back (12) or a nacelle side (24) includes a crane opening (16) through which an object (20) attached to the nacelle crane (15) is movable from the inner volume (V) or towards the inner volume (V) of the nacelle (10).

## Description

### Field of invention

The present invention relates generally to wind turbines, and more particularly to a wind turbine having a nacelle comprising a crane.

### Art Background

Wind turbines may include a crane or winch for moving components within the nacelle. A service crane may extend, when in operation, outside of the nacelle enclosure towards the external environment. In particular, wind turbine service cranes are known, for example from EP3296566, which extend upwards from inside of a nacelle through the hatch located in the nacelle roof and access e.g. an helihoist platform attached to the nacelle.

Therefore, it is desirable to have a nacelle including a service crane, which is able in operation to lift equipment from to the ground to the nacelle level and vice versa to lower equipment from the nacelle level to the ground. At the same time, it is desirable that such service crane can move equipment within the nacelle.

### Summary of the Invention

This objective may be met by the subject matter according to the independent claims. Advantageous embodiments of the present invention are described by the dependent claims.

According to the invention there is provided a nacelle for a wind turbine. The nacelle extends longitudinally along a longitudinal axis and comprises:
a nacelle front at which a wind rotor is subject to be rotatably coupled to the nacelle,
a nacelle back longitudinally opposite to the nacelle front,
a nacelle base at which the nacelle is subject to be rotatably coupled to a tower of the wind turbine,
a nacelle roof opposite to the nacelle base,
a nacelle crane at least partially housed in an inner volume of the nacelle delimited by the nacelle front, the nacelle back, the nacelle base, the nacelle roof and two nacelle sides. The nacelle back or a nacelle side includes a crane opening through which an object attached to the crane is movable from the inner volume or towards the inner volume of the nacelle.

The nacelle service crane of the present invention can in operation move objects in a direction transversal to the longitudinal axis of the nacelle, i.e. lift equipment from to the ground to the nacelle level and vice versa to lower equipment from the nacelle level to the ground. In addition, such nacelle service crane can in operation move objects in a direction parallel or orthogonal to the longitudinal axis of the nacelle, inside the inner volume of the nacelle.

The solution provided by the present invention is simple to design and cost-efficient. According to embodiments of the invention, a hatch with proper sealing may be provided at the crane opening.

According to embodiments of the invention, the crane will always stay inside the nacelle. In such embodiment, the crane is not exposed to environment. This achieves further safety and easiness of operation.

According to embodiments of the invention, the nacelle back or the nacelle side includes an upper portion adjacent to the nacelle roof and a lower portion adjacent to the nacelle base, the upper portion protruding with respect to the lower portion, the crane opening being provided between the upper portion and the lower portion. If the crane opening is provided on the nacelle back, the upper portion protrudes longitudinally with respect to the lower portion. If the crane opening is provided on a nacelle side, the upper portion protrudes orthogonally to the longitudinal axis of the nacelle with respect to the lower portion. The crane opening may be provided at an intermediate portion, comprised between the upper portion and the lower portion.

According to embodiments of the invention, the intermediate portion is inclined with respect to a vertical axis of an angle comprised between 0° and 90°. In particular, the intermediate portion is inclined with respect to the vertical axis of an angle of 45°.

According to an embodiment of the invention, the upper portion and the lower portion are substantially parallel to the vertical axis, while the intermediate portion is inclined of an angle of 45°.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic view of a wind turbine comprising a nacelle.
- Figure 2: shows a partial schematic section of a first embodiment of the nacelle of fig. 1, including features according to the present invention.
- Figure 3: shows a partial schematic section of a second embodiment of the nacelle of fig. 1, including features according to the present invention.

### Detailed Description

The illustration in the drawing is schematic. It is noted that in different figures, similar or identical elements or features are provided with the same reference signs. In order to avoid unnecessary repetitions elements or features which have already been elucidated with respect to a previously described embodiment are not elucidated again at a later position of the description.

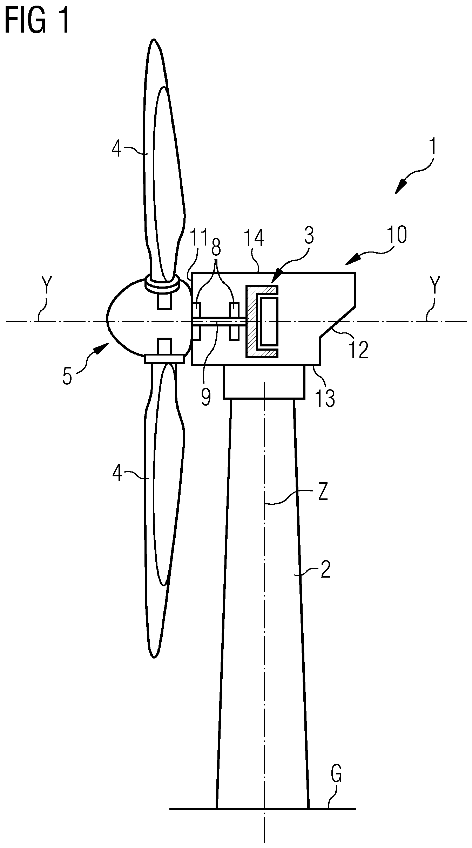

**Figure 1** shows a wind turbine 1 according to the invention. The wind turbine 1 comprises a tower 2, which is mounted on a non-depicted foundation, in order to be parallel to a vertical axis Z, which is orthogonal to a ground G. A nacelle 10 is arranged on top of the tower 2, in order to be rotatable about the vertical axis Z. Alternatively, the wind turbine 1 may be an off-shore wind turbine and consequently extends between a floating foundation or a foundation fixed to a seabed and the nacelle 10. The nacelle 10 extends longitudinally along a longitudinal axis Y, which tranversal to the vertical axis Z, and comprises a nacelle front 11 at which a wind rotor 5 is subject to be rotatably coupled to the nacelle 10. The wind rotor 5 has at least one blade 4 (in the embodiment of Figure 1, the wind rotor comprises three blades 4, of which only two blades 4 are visible). The wind rotor 5 is rotatable around a rotational axis, which may be parallel or coincident with the longitudinal axis Y. The blades 4 extend substantially radially with respect to the rotational axis Y and along a respective longitudinal axis, which is transversal to the longitudinal axis Y. In general, when not differently specified, the terms axial, radial and circumferential in the following are made with reference to the rotational axis Y. The nacelle 10 further comprises a nacelle back 12 longitudinally opposite to the nacelle front 11. The nacelle 10 extends longitudinally between the nacelle front 11 and the nacelle back 12. The nacelle 10 further comprises a nacelle base 13 where the nacelle 10 is subject to be rotatably coupled to the tower 2. The rotational coupling between the nacelle 10 and the tower allows to rotate the nacelle 10 with respect to the tower 2 about an axis, which is transversal to the longitudinal axis Y and normally orthogonal to the ground G. Opposite to the nacelle base 13, the nacelle 10 comprises a nacelle roof 14. The nacelle 10 extends between the nacelle base 13 and the nacelle roof 14 in a direction orthogonal to the longitudinal axis Y and parallel to the vertical axis Z. In a third direction, orthogonal to both the longitudinal axis Y and the vertical axis Z, the nacelle 10 extends between two nacelle sides 24. The assembly defined by the nacelle front 11, the nacelle back 12, the nacelle base 13, the nacelle roof 14 and the two nacelle sides 24 delimits an inner volume V of the nacelle 10.

The wind turbine 1 comprises an electric generator 3, including a stator and a rotor. The rotor is rotatable with respect to the stator about the rotational axis. The wind rotor 5 is rotationally coupled with the electric generator 3 either directly, e.g. direct drive or by means of a rotatable main shaft 9 and/or through a gear box (not shown in Figure 1). A schematically depicted bearing assembly 8 is provided in order to hold in place the main shaft 9 and the rotor 5. The rotatable main shaft 9 extends along the rotational axis Y. The generation of electrical energy through the wind turbine 1 is not a specific object of the present invention and therefore the functioning of the electric generator 3 will not describe in further details.

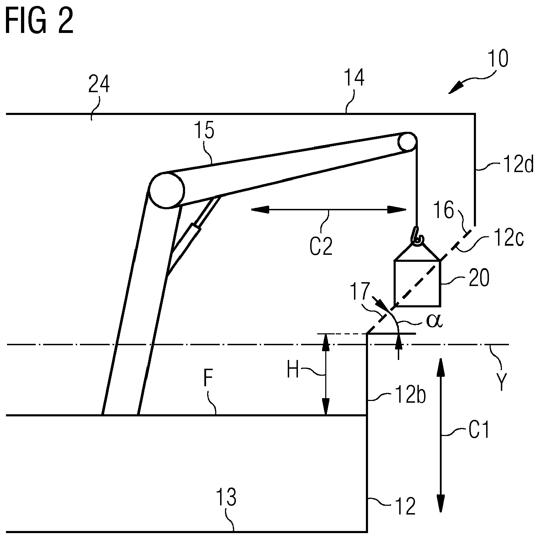

**Figure 2** show in more detail a partial representation of the inner volume V of the nacelle 10 in a longitudinal section taken along the longitudinal axis Y of the nacelle 10.

The nacelle 10 comprises a nacelle crane 15 housed inside the inner volume V. The nacelle crane 15 is fixed to a floor F or other nacelle structure inside the inner volume V of the nacelle 10. The floor F is normally used to provide a support surface to operators moving in the inner volume V of the nacelle 10. The nacelle crane 15 moves in operation an object 20 fixed to the crane according to two main moving directions C1, C2: a first direction C1 transversal to the longitudinal axis Y of the nacelle and parallel to the vertical axis Z (for example to move the object 20 from or towards the ground G) and a second direction C2 parallel to the longitudinal axis Y of the nacelle (for example to move the object 20 between the nacelle front 11 and the nacelle back 12 on a plane parallel to the floor F). The nacelle crane 15 may move in operation the object 20 fixed to the crane according to a third moving direction C3 orthogonal to both the longitudinal axis Y an to the vertical axis Z (for example to move the object 20 between the two nacelle sides 24 on a plane parallel to the floor F). The nacelle crane 15 moves the object 20 at a railing height H from the floor F of the nacelle 10. The nacelle back 12 includes a crane opening 16 through which the object 20 attached to the nacelle crane 15 is movable from the inner volume V or towards the inner volume V of the nacelle 10. The object 20 is movable through the crane opening 16 along one or both of the two main moving direction C1, C2.

The nacelle back 12 includes an upper portion 12a adjacent to the nacelle roof 14, a lower portion 12b adjacent to the nacelle base 13 and an intermediate portion 12c, between the upper portion 12a and the lower portion 12b. The upper portion 12a longitudinally protrudes with respect to the lower portion 12b. The upper portion 12a and the lower portion 12b are substantially orthogonal to the longitudinal axis Y and substantially parallel to the vertical axis Z. The intermediate portion 12c is inclined with respect to the vertical axis Z of an angle α of 45°. According to other possible embodiments of the invention, the intermediate portion 12c is inclined with respect to the vertical axis Z of an angle α comprised between 0° and 90°, provided that the opening 16 is so oriented to allow the object 20 to be moved therethrough. The crane opening 16 is provided at the intermediate portion 12c. The crane opening 16 is closable, when needed (for example when the nacelle crane 15 is not in operation), by means of a sealed hatch 17 (schematically represented in figure 2 by a dashed line).

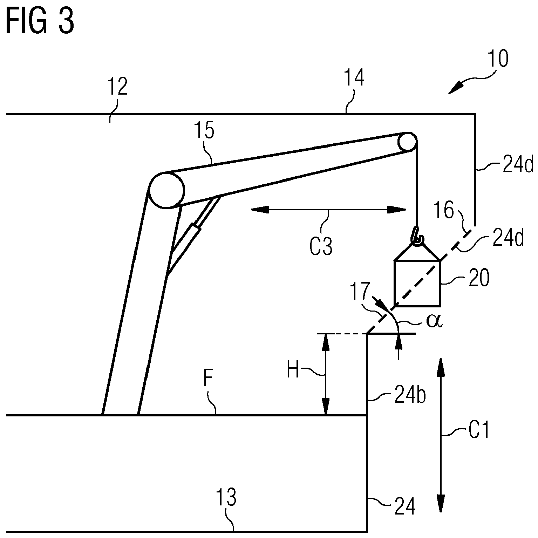

**Figure 3** show in more detail a partial representation of another embodiment of the inner volume V of the nacelle 10 in a transversal section taken perpendicular to the longitudinal axis Y of the nacelle 10. The transversal section of figure 3 is seen from the nacelle front 11 towards the nacelle back 12.

Differently from the embodiment of figure 2, one of the nacelle sides 24 includes an upper portion 24a adjacent to the nacelle roof 14, a lower portion 24b adjacent to the nacelle base 13 and an intermediate portion 24c, between the upper portion 24a and the lower portion 24b. The upper portion 24a protrudes with respect to the lower portion 24b along a direction orthogonal to the longitudinal axis Y and to the vertical axis Z. The upper portion 24a and the lower portion 24b are substantially parallel to the vertical axis Z. The intermediate portion 24c is inclined with respect to the vertical axis Z of an angle α of 45°. According to other possible embodiments of the invention, the intermediate portion 24c is inclined with respect to the vertical axis Z of an angle α comprised between 0° and 90°, provided that the opening 16 is so oriented to allow the object 20 to be moved therethrough. The crane opening 16 is provided at the intermediate portion 24c. The crane opening 16 is closable, when needed (for example when the nacelle crane 15 is not in operation), by means of a sealed hatch 17 (schematically represented in figure 2 by a dashed line).

In this second embodiment, the nacelle crane 15 moves in operation an object 20 fixed to the crane according to two main moving directions C1, C3: the first direction C1 transversal to the longitudinal axis Y of the nacelle and parallel to the vertical axis Z (for example to move the object 20 from or towards the ground G) and the third direction C3 orthogonal to both the longitudinal axis Y an to the vertical axis Z (for example to move the object 20 between the two nacelle sides 24 on a plane parallel to the floor F). The nacelle crane 15 may move in operation the object 20 fixed to the crane according to the second moving direction C2, too. The crane opening 16 is provided on one of the two nacelle sides 24. The object 20 attached to the nacelle crane 15 is movable through the crane opening 16 from the inner volume V or towards the inner volume V of the nacelle 10. The object 20 is movable through the crane opening 16 along one or both of the two main moving direction C1, C3.

According to other embodiments of the invention (not shown) the nacelle back 12 or the nacelle side 24 where the crane opening 16 is provided may have other shapes with an upper portion 12a, 24a longitudinally with respect to the lower portion 12b, 24b, the crane opening 16 being provided between the upper portion 12a, 24a and the lower portion 12b, 24b, in such a way that the object 20 attached to the nacelle crane 15 is movable from the inner volume V or towards the inner volume V, without interfering with elements of the nacelle 10.

According to different embodiments of the invention, the nacelle crane 15 may be partially or completely housed in the inner volume V of the nacelle 10.

## Claims

1. A nacelle (10) for a wind turbine (1) extending longitudinally along a longitudinal axis (Y) and comprising:
a nacelle front (11) at which a wind rotor (5) is subject to be rotatably coupled to the nacelle (10),
a nacelle back (12) longitudinally opposite to the nacelle front (11),
a nacelle base (13) at which the nacelle (10) is subject to be rotatably coupled to a tower (2) of the wind turbine (1),
a nacelle roof (14) opposite to the nacelle base (13),
a nacelle crane at least partially housed in an inner volume (V) of the nacelle (10) delimited by the nacelle front (11), the nacelle back (12), the nacelle base (13) the nacelle roof (14) and two nacelle sides (24),
wherein the nacelle back (12) or a nacelle side (24) includes a crane opening (16) through which an object (20) attached to the nacelle crane (15) is movable from the inner volume (V) or towards the inner volume (V) of the nacelle (10) .

2. The nacelle (10) of claim 1, wherein the nacelle back (12) or the nacelle side (24) includes an upper portion (12a, 24a) adjacent to the nacelle roof (14) and a lower portion (12b, 24b) adjacent to the nacelle base (13), the upper portion (12a, 24a) protruding with respect to the lower portion (12b, 24b), the crane opening (16) being provided between the upper portion (12a) and the lower portion (12b).

3. The nacelle (10) of claim 2, wherein the nacelle back (12) or the nacelle side (24) includes an intermediate portion (12c, 24c) between the upper portion (12a, 24a) and the lower portion (12b, 24b), the crane opening (16) being provided at the intermediate portion (12c, 24c).

4. The nacelle (10) of claim 3, wherein the intermediate portion (12c, 24c) is inclined with respect to a vertical axis (Z) of an angle (α) comprised between 0° and 90°.

5. The nacelle (10) of claim 4, wherein the upper portion (12a, 24a) and the lower portion (12b, 24b) are substantially parallel to the vertical axis (Z).

6. The nacelle (10) of any of the previous claims, wherein the nacelle crane (15) can be operated parallel (C2) and orthogonal (C1, C3) to the longitudinal axis (Y).

7. The nacelle (10) of any of the previous claims, wherein the nacelle (10) further comprises a sealed hatch (17) at the crane opening (16).

8. The nacelle (10) of any of the previous claims, wherein the nacelle crane (15) is completely housed in the inner volume (V) of the nacelle (10).

9. A wind turbine (1) including the nacelle (10) of any of the previous claims.
